# EUROPEAN PATENT APPLICATION

(11) **EP 4 064 213 A1**
(43) Date of publication of application: **28.09.2022**
(21) Application number: 21164776.3
(22) Date of filing: 25.03.2021
(51) Int. Cl.: G06V 10/44, G06V 20/40, G06V 20/56, G06K 9/62, G06V 40/20

(54) **UTILITY VEHICLE AND CORRESPONDING APPARATUS, METHOD AND COMPUTER PROGRAM FOR A UTILITY VEHICLE**

(71) Applicant: Grazper Technologies ApS, 1265 Copenhagen K (DK)
(72) Inventor: JAKOBSEN, Thomas, 1265 Copenhagen K (DK); PIESTER, Lars Martin, 1265 Copenhagen K (DK)
(74) Representative: 2SPL Patentanwälte PartG mbB

(57) **Abstract**

Various examples relate to a utility vehicle, and to a corresponding apparatus, method and computer program for a utility vehicle. The apparatus comprises at least one interface for obtaining video data from one or more cameras of the utility vehicle. The apparatus further comprises one or more processors. The one or more processors are configured to process, using a machine-learning model, the video data to determine pose information of a person being shown in the video data. The machine-learning model is trained to generate pose-estimation data based on video data. The one or more processors are configured to detect at least one pre-defined pose based on the pose information of the person. The one or more processors are configured to control the utility vehicle based on the detected at least one pre-defined pose.

## Description

### Field

Various examples relate to a utility vehicle, and to a corresponding apparatus, method and computer program for a utility vehicle.

### Background

The use of cameras to monitor an environment of vehicles is a field of research and development. For example, in personal vehicles, a camera-based detection of humans has been used previously for both navigation and safety enforcement. For example, in some modern vehicles, pedestrians may be automatically identified and visualized in a three-dimensional or top-down view. Additionally, warnings may be given, or the vehicle may brake automatically.

Similar systems are used for construction machinery. Construction machinery is usually bigger than personal vehicles, with the cameras being used to detect persons that are present around the construction vehicles, e.g. to make sure that the operator of the construction vehicle is aware of the persons while controlling the construction vehicle. While this can help with operation safety of the construction vehicle, this approach may be of limited use within crowded and narrow construction sites, or other sites where the view of the operator is limited.

### Summary

Various aspects of the present disclosure are based on the finding, that, in construction sites, the perspective from a cabin of a utility vehicle may be insufficient for certain tasks, such as precision movement of a truck relative to a garbage tube. Furthermore, in some cases, a utility vehicle may be moved repeatedly in small increments, e.g., when the utility vehicle is being used to collect tree cuttings along a tree-lined road. In such cases, a camera system of the vehicle may be used to record a pose being performed by a person outside the utility vehicle, and to control the vehicle from outside the vehicle based on the detected pose.

Various aspects of the present disclosure relate to an apparatus for a utility vehicle. The apparatus comprises at least one interface for obtaining video data from one or more cameras of the utility vehicle. The apparatus further comprises one or more processors. The one or more processors are configured to process, using a machine-learning model, the video data to determine pose information of a person being shown in the video data. The machine-learning model is trained to generate pose-estimation data based on video data. The one or more processors are configured to detect at least one pre-defined pose based on the pose information of the person. The one or more processors are configured to control the utility vehicle based on the detected at least one pre-defined pose. For example, using the pose-estimation data, the utility vehicle may be controlled from outside the utility vehicle without requiring a remote-control device, so the operator can stay outside the vehicle to monitor the distance between the utility vehicle and an obstacle or to determine an alignment of the utility vehicle with another entity. This may improve the workflow of the driver as he does not have to repeatedly enter and exit the cabin of the utility vehicle.

For example, the proposed concept may "recognize" a plurality of pre-defined poses, which may each be linked with a specific control instruction for controlling the utility vehicle. In other words, the one or more processors may be configured to detect at least one of a plurality of pre-defined poses. Each pose of the plurality of pre-defined poses may be associated with a specific control instruction for controlling the utility vehicle. The one or more processors may be configured to control the utility vehicle based on the control instruction associated with the detected pose. For example, a clear link between a pose and a corresponding control instruction may avoid ambiguities when controlling the utility vehicle.

In general, the term "pose" may refer to different types of poses - "static" poses, which are performed without moving, and "signal" poses, which comprise a movement between two poses. In other words, the plurality of pre-defined poses may comprise one or more static poses and one or more signal poses. For example, the one or more signal poses may be based on a transition from a first pose to a second pose. For example, when a person holds up their hands in front of their torso, with the open palms facing outwards, and keeps the hands in this position, the person may perform a static pose. If the person holds up their hands in front of their torso, with the open palms facing outwards and repeatedly moves the hands away from the torso, the person may perform a signal pose.

For example, the static pose described above may be associated with a control instruction for halting a movement of the utility vehicle, and the signal pose described above may be associated with a control instruction for controlling the utility vehicle to move backwards. However, the proposed concept is not limited to these examples. For example, the plurality of pre-defined poses may comprise at least one of a static pose associated with a control instruction for halting a movement of the utility vehicle, a static pose associated with a control instruction for starting an engine of the utility vehicle, a static pose associated with a control instruction for stopping an engine of the utility vehicle, a signal pose associated with a control instruction for controlling the utility vehicle to move forward, and a signal pose associated with a control instruction for controlling the utility vehicle to move backward.

In some examples, a static pose may be detected based on a single frame of video data, and a signal pose may be reconstructed from two or more poses that are determined based on two or more (isolated) frames of video data. In some examples, however, the movement of the person, as shown over multiple frames of the video data, may be considered when determining the pose information. For example, the machine-learning model may be trained to output the pose-estimation data with information about a progress of the pose of the person over time as shown over the course of a plurality of frames of the video data. The one or more processors may be configured to detect the at least one pre-defined pose based on the information about the progress of the pose. In particular, the one or more processors may be configured to detect at least one pre-defined signal pose based on the information on the progress of the pose. The at least one pre-defined signal pose may be based on a transition from a first pose to a second pose. For example, the detection of signal poses may benefit from the machine-learning model being trained to track the pose over multiple frames.

In general, the control of the utility vehicle may be restricted, so that the utility vehicle cannot be controlled by unauthorized personnel. For example, the one or more processors may be configured to detect whether the person carries a pre-defined item, and to control the utility vehicle if the person carries the pre-defined item. Accordingly, the pre-defined item may reveal the person to be authorized to control the vehicle.

In some examples, the pre-defined item may be one of a signaling beacon and a safety vest. For example, a signaling beacon may both facilitate the pose detection and reveal the bearer to be authorized to control the vehicle. In this case, the machine-learning model may be trained to generate pose-estimation data of a person carrying a signal beacon based on video data, e.g., to tailor the generation of the pose-estimation data to the use of the signal beacon. Furthermore, persons without safety vests, which may be mandatory at construction sites and other sites where a utility vehicle is used, may be disregarded.

In various examples, different persons may have different levels of authorization. For example, a person tasked with controlling the utility vehicle may be authorized to instruct the utility vehicle to perform any command, while other persons might have no authorization or might only have authorization to stop the utility vehicle (or the engine of the utility vehicle), but not to instruct the utility vehicle to move. In other words, the one or more processors may be configured to determine a level of authorization of the person, and to control the utility vehicle if the person has sufficient authorization to control the utility vehicle. For example, different levels of authorization may allow different commands to be issued.

In some examples, the control of the utility vehicle may be made dependent on an identification or re-identification of the person. For example, the one or more processors may be configured to identify or re-identify the person, and to control the utility vehicle based on the identification or re-identification of the person.

The identification or re-identification of the person may be performed using one of several approaches. For example, the one or more processors may be configured to identify the person using facial recognition on the video data. When using facial recognition, a new person may be registered for controlling the utility vehicle by providing one or more photos of the face of the person.

Alternatively, person re-identification may be used to re-identify the person. Visual person re-identification serves the purpose of distinguishing or re-identifying people, from their appearance alone, in contrast to identification that seeks to establish the absolute identity of a person. The one or more processors may be configured to re-identify the person using a machine-learning model that is trained for person re-identification. In this case, a new person may be registered for controlling the utility vehicle by providing a so-called re-identification code representing the person.

Alternatively or additionally, external identifiers that are carried or worn by the person may be used to identify the person. For example, the one or more processors may be configured to identify the person by detecting a (passive) visual identifier, such as a badge with a machine-readable code, that is carried (e.g., worn) by the person in the video data. Alternatively or additionally, the one or more processors may be configured to identify the person by detecting an active beacon, such as an active radio beacon or active visual beacon carried by the person. Passive visual identifiers, such as the visual identifier that is included in the badge or a visual identifier that is printed on a sticker that is attached to a safety helmet, are easier to generate, as they can be printed out and worn as part of batches, while active beacons are easier to detect, at the expense of additional hardware to be carried/worn by the respective persons. In contrast to active beacons, passive visual identifiers may convey their respective content without actively transmitting the content.

As mentioned above, the one or more processors may be configured to determine a level of authorization of the person, and to control the utility vehicle if the person has sufficient authorization to control the utility vehicle. For example, the one or more processors may be configured to determine the level of authorization of the person based on the identity or re-identification of the person. Additionally or alternatively, the one or more processors may be configured to determine the level of authorization of a person based on a visual identifier or active beacon that is carried or worn by the person. For example, the visual identifier or active identifier may reveal the bearer to be authorized to control the vehicle.

In various examples, the video data comprises a view from above. For example, the view from above may help avoid a line-of-sight between the person and the one or more cameras to be broken.

Various examples of the present disclosure relate to a method for a utility vehicle. The method comprises obtaining video data from one or more cameras of the utility vehicle. The method comprises processing, using a machine-learning model, the video data to determine pose information of a person being shown in the video data. The machine-learning model is trained to generate pose-estimation data based on video data. The method comprises detecting at least one pre-defined pose based on the pose information of the person. The method comprises controlling the utility vehicle based on the detected at least one pre-defined pose.

Various examples of the present disclosure relate to a computer program having a program code for performing the above method, when the computer program is executed on a computer, a processor, processing circuitry, or a programmable hardware component.

Various examples of the present disclosure relate to a utility vehicle comprising the apparatus presented above and/or being configured to perform the method presented above. The utility vehicle comprises one or more cameras. For example, the above apparatus may be integrated into the utility vehicle, or the method may be performed by the utility vehicle, to enable controlling utility vehicle from outside the cabin. For example, the one or more cameras may be arranged at the top of a cabin of the utility vehicle, or the one or more cameras may be arranged at a platform extending from the top of the cabin of the utility vehicle. Both placements may be suitable for providing a view from above.

### Brief description of the Figures

Some examples of apparatuses and/or methods will be described in the following by way of example only, and with reference to the accompanying figures, in which:
Fig. 1a shows a block diagram of an example of an apparatus for a utility vehicle;
Fig. 1b shows a schematic diagram of an example of a utility vehicle, in particular of a construction vehicle, comprising an apparatus;
Figs. 1c and 1d show flow charts of examples of a method for a utility vehicle;
Fig. 2 shows a schematic diagram of a system comprising two cameras, a processing component and an input output component;
Figs. 3a and 3b show examples of a placement of cameras on top of a vehicle; and
Figs. 4a to 4h show schematic diagrams of examples of static poses or signal poses.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Various examples of the present disclosure generally relate to utility vehicles, such as construction vehicles, and in particular to a concept for controlling a utility vehicle.

In the following, various examples are given of an apparatus for a utility vehicle, of a utility vehicle comprising such an apparatus, and of corresponding methods and computer programs. The following examples are based on an automatic image-based detection of humans in the vicinity of utility vehicles for controlling the utility vehicle.

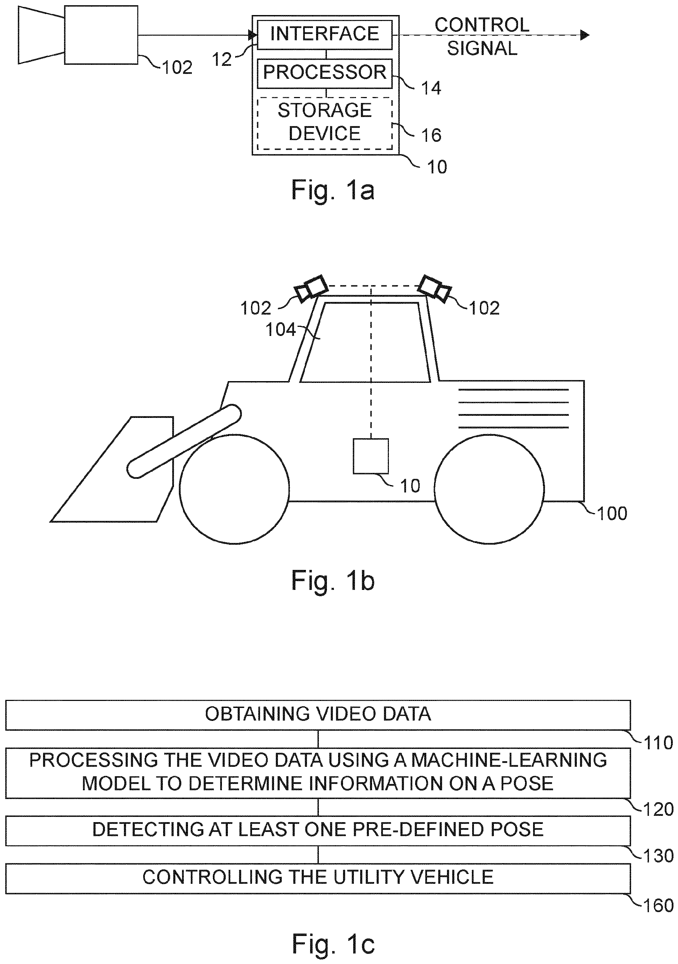

Fig. 1a shows a block diagram of an example of an apparatus 10 for a utility vehicle 100. The apparatus 10 comprises at least one interface 12 and one or more processors 14. Optionally, the apparatus 10 further comprises one or more storage devices 16. The one or more processors are 14 are coupled to the at least one interface 12 and to the optional one or more storage devices 16. In general, the functionality of the apparatus is provided by the one or more processors 14, with the help of the at least one interface 12 (for exchanging information, e.g., with one or more cameras 102 of the utility vehicle), and/or with the help of the one or more storage devices 16 (for storing information). For example, the at least one interface may be suitable for, and or configured to, obtaining/obtain video data from the one or more cameras 102 of the utility vehicle.

Fig. 1b shows a schematic diagram of an example of a utility vehicle 100, in particular of a construction vehicle, comprising the apparatus 10. The construction vehicle shown in Fig. 1b is a front-loader. However, the same concept may be used with other utility vehicles or construction vehicles as well. For example, the utility vehicle may be one of an excavator, a compactor, a bulldozer, a grader, a crane, a loader, a truck, a forklift, a road sweeper, a tractor, a combine etc. For example, the utility vehicle may be a land vehicle. However, the same concept may be applied to other devices as well, such as a robot, e.g., a stationary robot (e.g., a stationary robot for use in a manufacturing environment) or mobile or vehicular robots that are capable of moving. Thus, a robot may comprise the apparatus 10 and the one or more cameras 102. As pointed out above, the utility vehicle 100 comprises the one or more cameras 102, which are arranged at the top of the cabin 104 of the front-loader shown in Fig. 1b.

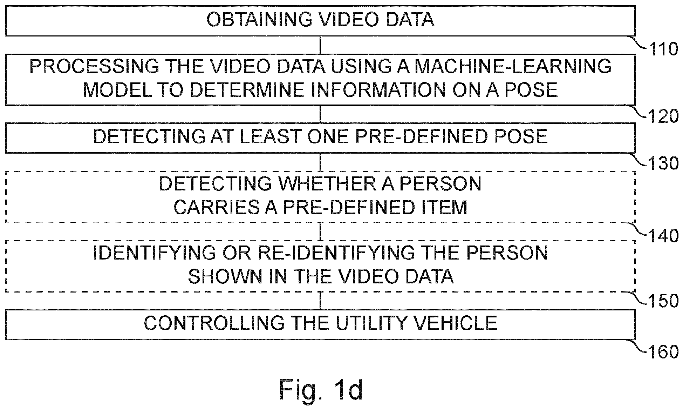

In general, various aspects of the utility vehicle 100 are controlled by the apparatus 10. The functionality provided by the apparatus 10, in turn, may also be expressed with respect to a corresponding method, which is introduced in connection with Figs. 1c and/or 1d. For example, the one or more processors 14 may be configured to perform the method of Figs. 1c and/or Id, with the help of the at least one interface 12 (for exchanging information) and/or the optional one or more storage devices 16 (for storing information).

Figs. 1c and 1d show flow charts of examples of the corresponding (computer-implemented) method for the utility vehicle 100. The method comprises obtaining 110 video data from one or more cameras of the utility vehicle. The method comprises processing 120, using a machine-learning model, the video data to determine pose information of a person being shown in the video data. The machine-learning model is trained to generate pose-estimation data based on video data. The method comprises detecting 130 at least one pre-defined pose based on the pose information of the person. The method comprises controlling 160 the utility vehicle based on the detected at least one pre-defined pose. The method may comprise one or more additional optional features, as shown in Fig. Id, which are introduced in connection with the apparatus 10 and/or the utility vehicle 100.

The following description relates to the apparatus 10, the utility vehicle 100, the corresponding method of Figs. 1c and/or 1d and to a corresponding computer-program. Features that are introduced in connection with the apparatus 10 and/or the utility vehicle 100 may likewise be applied to the corresponding method and computer program.

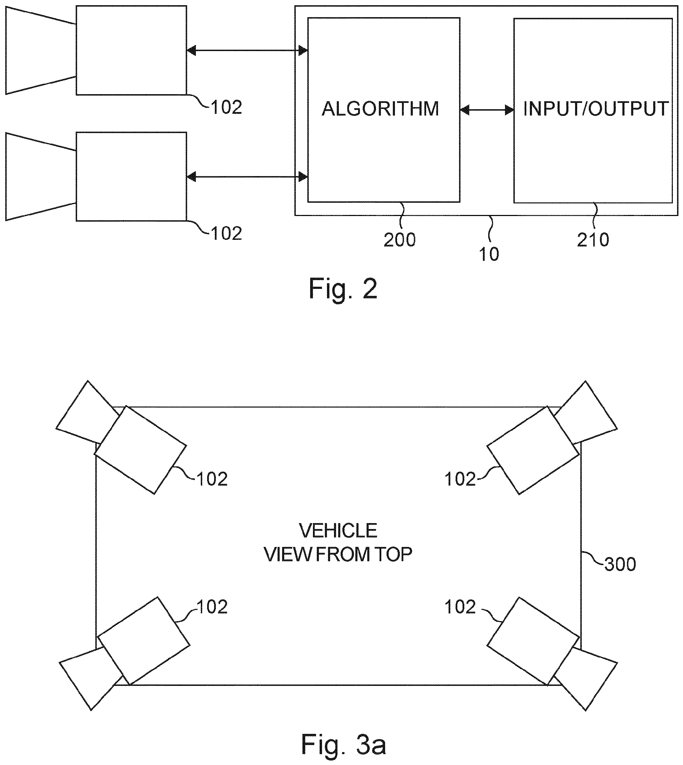

Examples of the present disclosure relate to the analysis of the video data that is provided by the one or more cameras of the utility vehicle. Fig. 2 shows a schematic diagram of a system comprising two cameras 102, a processing component 200 and an input/output component 210. For example, the processing component 200 and/or the input/output component 210 may be implemented by the apparatus 10 of Figs. 1a and 1b. Fig. 2 shows a high-level abstraction of the proposed concept, where the video data is generated by the one or more cameras 102, then analyzed by one or more algorithms 200, which may use a deep network process that can be implemented using one or more machine-learning models, and then output via an input/output component 210, e.g., as visualization, auditory signals, or as control signals for controlling an aspect of the utility vehicle.

Thus, the one or more processors 14 are configured to obtain the video data from the one or more cameras 102 of the vehicle (as shown in Figs. 1a and 1b). In some cases, the utility vehicle may comprise a single camera, e.g., a single 2D camera or a single depth camera. However, in some examples, the vehicle may comprise a plurality of cameras (i.e., two or more cameras), which may cover a plurality of areas surrounding the utility vehicle. In some examples, the plurality of cameras may cover a plurality of non-overlapping areas surrounding the utility vehicle. However, in some examples, the plurality of areas surrounding the utility vehicle may partially overlap. For example, at least the area or areas of interest in the analysis of the video data may be covered by two or more of the cameras, e.g., to enable or facilitate three-dimensional pose estimation, and/or to avoid a person being occluded by an obj ect.

In some examples, the video data is obtained from two or more cameras. For example, the fields of view of the video data of the two or more cameras may be "unwrapped" to form a single, unified top-down view of the vehicle's surroundings. Alternatively, the video data obtained from the cameras may be processed (e.g., using a machine-learning model) individually rather than being "unwrapped" in a unified view (which is then processed). For example, the video data, e.g., the unified view or the separate views, may be recorded for later use.

In many cases, utility vehicles, such as construction vehicles, are tall vehicles. For example, trucks, cranes, compactors etc. can be three meters tall (or even taller), with the cabin often being placed at heights of two meters or more. This height above ground may be used to gain an overview of the areas surrounding the utility vehicle, which may further help in avoiding the occlusions of persons. Furthermore, a high placement of cameras facilitates getting an overview of an exact placement of persons (and objects) in the vicinity of the utility vehicle. Thus, the one or more cameras may be placed at the top of the vehicle, e.g., at or above the top of the cabin 104 of the utility vehicle. For example, two to four (or more than four, or even just one) cameras may be placed at each of the "corners" of the vehicle at a high position (e.g., on top of the roof of the cabin of an operator of the utility vehicle). While the concept can be implemented using a single camera, the view of the camera may be obstructed on the construction site.

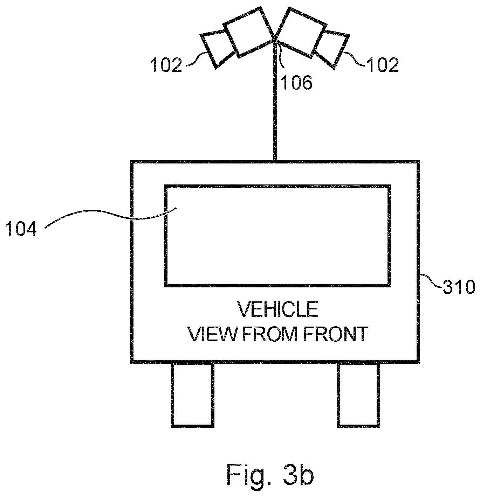

Figs. 3a and 3b show examples of a placement of cameras 102 on top of utility vehicles 300; 310. Fig. 3a shows a two-dimensional drawing of a vehicle from above, with cameras 102 being placed at the "corners" of the vehicle. In Fig. 3a, four cameras 102 are placed at the corners of the top of the cabin 104 of the utility vehicle 300. Fig. 3b shows a two-dimensional drawing of a front-view of a vehicle. In Fig. 3b, the cameras 102 are placed at a high position (to enable easy overview and accurate positioning of humans), e.g., arranged at a platform 106 extending from the top of the cabin of the utility vehicle. For example, a retractable pole may be raised from the top of the cabin 104 to form the platform 106. For example, the platform 106 may be at least one meter above a roof of the cabin 104. Furthermore, the one or more cameras may be placed at a height of at least two meters (or at least three meters) above ground. Consequently, the video data may comprise a view from above, e.g., a view on the person from above. Together, the views from the cameras may cover the area surrounding the utility vehicle.

In various examples of the present disclosure, the video data is analyzed to identify a pose of the person being shown in the video data. This analysis is performed with the help of a machine-learning model (further denoted "pose-estimation machine-learning model") being trained to generate pose-estimation data based on video data. For example, the pose-estimation machine-learning model is trained to perform pose-estimation on the video data. In other words, the one or more processors are configured to process, using the pose-estimation machine-learning model, the video data to determine pose information of the person being shown in the video data.

In general, the pose information identifies a (body) pose taken by the person shown in the video data. In this context, the pose of the person may be based on, or formed by, the relative positions and angles of the limbs of the person. For example, the person may be represented by a so-called pose-estimation skeleton, which comprises a plurality of joints and a plurality of limbs. However, the terms "joints" and "limbs" of the pose-estimation skeleton are used in an abstract sense do not necessarily mean the same as the terms being used in medicine. The pose-estimation skeleton may be a graph, with the joints being the vertices of the graphs and the limbs being the edges of the graph. In a pose-estimation skeleton, the joints are interconnected by the limbs. While some of the limbs being used to construct pose-estimation skeletons correspond to their biological counterparts, such as "upper arm", "lower arm", "thigh" (i.e., upper leg) and "shank" (i.e., lower leg), the pose-estimation skeleton may comprise some limbs that are not considered limbs in a biological sense, such as a limb representing the spine, a limb connecting the shoulder joints, or a limb connecting the hip joints. In effect, the limbs connect the joints, similar to the edges of the graph that connect the vertices. For example, limbs may be rotated relative to each other at the joints connecting the respective limbs. For example, the pose-estimation machine-learning model may be trained to output a pose-estimation skeleton (e.g., as a graph) based on the video data.

In some examples, the pose-estimation machine-learning model may be trained to output two-dimensional pose-estimation data. In other words, the pose information of the person may be based on or comprise two-dimensional pose-estimation data on the pose of the person. In this case, the pose-estimation data may comprise a pose-estimation skeleton, where the joints of the skeleton are defined in two-dimensional space, e.g., in a coordinate system that corresponds to the coordinate system of frames of the video data. For example, the video data may be used as an input for the pose-estimation machine-learning model, and the two-dimensional pose-estimation data may be output by the pose-estimation machine-learning model. Various well-known machine-learning models may be used for the task, such as DeepPose or Deep High-Resolution Representation Learning for Human Pose Estimation (HRNet). Such two-dimensional pose-estimation data may suffice for the following processing of the pose information.

In some examples, however, three-dimensional pose-estimation data may be used, i.e., the pose information of the person may comprise or be based on three-dimensional pose-estimation data on the pose of the person, and/or the positions of the joints of the pose-estimation skeleton may be defined in a three-dimensional coordinate system. For example, the pose-estimation machine-learning model may be trained to perform three-dimensional pose-estimation. In some examples, the pose-estimation machine-learning model may be trained to perform three-dimensional pose-estimation based on video data from a plurality of cameras that show the person from a plurality of angles of observation. For example, the plurality of angles of observation may show the movement and pose(s) of the person in a region of space, as recorded by the plurality of cameras being placed around the region of space. Alternatively, the pose-estimation machine-learning model may be trained to perform three-dimensional pose-estimation based on video data from a single camera. In this case, the pose-estimation machine-learning model may be trained to perform three-dimensional pose-estimated based on the video data from the single camera.

Alternatively, the three-dimensional pose-estimation data may be generated based on the two-dimensional pose-estimation data. The one or more processors may be configured to post-process the two-dimensional pose-estimation data to generate the three-dimensional pose-estimation data, e.g., using a further machine-learning model, or using triangulation on multiple time-synchronized samples of pose-estimation data that are based on different angles of observation.

In general, the video data comprises a plurality of frames of video data. In some examples, the pose-estimation machine-learning model may be trained to generate and output the pose-estimation data separately for each frame of the plurality of frames of video data. Alternatively, the pose-estimation machine-learning model may be trained to generate the pose-estimation data across frames, e.g., by tracking the joints of the pose-estimation skeleton across frames. This may be used to track a progress of the pose across multiple frames of the video data. Consequently, the pose-estimation machine-learning model may be trained to output the pose-estimation data with information about a progress of the pose of the person over time as shown over the course of a plurality of frames, and the pose information may comprise the information about the progress of the pose of the person over time as shown over the course of a plurality of frames of the video data. For example, the information about the progress of the pose of the person over time may comprise, or be used to generate, an animation of the progress of the pose. For example, the information on the progress of the pose, e.g., the animation, may be further processed by another machine-learning model / deep network to provide detailed information about the movement of the person over time. For example, the pose information may comprise, for each frame or for a subset of the frames of video data, two- or three-dimensional pose estimation data.

In some cases, the video data may show multiple persons. In this case, the pose-estimation machine-learning model may output the pose-estimation data separately for each person. For example, the output of the pose-estimation machine-learning model may enumerate the persons recognized and output the pose-estimation data per person recognized. Accordingly, the pose-estimation machine-learning model may also be trained to perform person segmentation, in order to separate multiple persons visible in the video data. For example, the pose-estimation machine-learning model may be trained to distinguish persons using a location of the persons, a visual appearance of the person, a body pose of the persons, limb lengths of the respective persons or using person re-identification. In some cases, however, the segmentation may be performed separately based on the output of the pose-estimation machine-learning model, e.g., by a separate machine-learning model or by a segmentation algorithm. For example, the one or more processors may be configured to, if the video data shows multiple persons, segment the pose-estimation data of the persons based on the output of the pose-estimation machine-learning model.

In the proposed concept, the pose-estimation functionality is used to control the utility vehicle. For example, specific body poses may be used by people outside the vehicle to control the behavior of the vehicle. Accordingly, the one or more processors may be configured to detect at least one pre-defined pose based on the pose information of the person, and to control the utility vehicle based on the detected at least one pre-defined pose. In this case, the operator of the utility vehicle may stand outside the utility vehicle and control the utility vehicle from the outside.

For example, a system of signals may be adapted that is similar to the system aircraft marshallers use on the runway. In this case, the operator of the utility vehicle may be a "marshaller" of the utility vehicle. As a marshaller, the operator may be permitted inside a safety area of the utility vehicle.

In various examples, the control of the utility vehicle may be restricted, e.g., to avoid an erroneous or malicious takeover of the utility vehicle. Therefore, the proposed concept may include a component to determine an authorization of the person with respect to the controlling of the utility vehicle. For example, as mentioned above, a person tasked with controlling the utility vehicle may be authorized to instruct the utility vehicle to perform any command, while other persons might have no authorization or might only have authorization to stop the utility vehicle (or the engine of the utility vehicle), but not to instruct the utility vehicle to move. In other words, the one or more processors may be configured to determine a level of authorization of the person, and to control the utility vehicle if the person has sufficient authorization to control the utility vehicle. For example, based on the level of authorization, the one or more processors may issue some commands, while other commands may be blocked. In other words, different levels of authorization may allow different commands to be issued.

To restrict the control of the utility vehicle, two general approaches may be chosen. One, the person shown in the video data may be identified or re-identified, and the utility vehicle may be controlled if the person being identifier or re-identified is authorized to control the utility vehicle, e.g., as the person is registered as operator or "marshaller" of the utility vehicle. Accordingly, the one or more processors may be configured to identify or re-identify the person, and to control the utility vehicle based on the identification or re-identification of the person, e.g., if the person is identified or re-identified as being authorized to control the utility vehicle. For example, the one or more processors may be configured to determine the level of authorization of the person based on the identity or re-identification of the person. For example, the one or more processors may be configured to look up the level of authorization of the person in a database, e.g. based on the identity of re-identification of the person.

Two, the person may carry special equipment that is exclusive to persons being authorized to control the vehicle. For example, the one or more processors may be configured to detect whether the person carries a pre-defined item, such as a hand-held signaling beacon and/or a safety vest, and to control the utility vehicle (only) if the person carries the pre-defined item. For example, only persons carrying one or two (handheld) safety beacons and a safety vest might be authorized to control the utility vehicle. As mentioned above, a signaling beacon may reveal the bearer to be authorized to control the utility vehicle (e.g., any command of the vehicle). In this case, the pose-detection may be tailored to persons carrying signaling beacons. In other words, the machine-learning model may be trained to generate pose-estimation data of a person carrying at least one signal beacon based on video data. For example, the signaling beacon may be seen as another limb of the pose-estimation skeleton.

A safety vest may reveal the bearer to be authorized to perform a subset of commands, e.g., to stop the utility vehicle or to stop an engine of the utility vehicle. But also other external identifiers, such as a visual identifier or an active beacon may be used to determine the level of authorization of the person wearing or carrying the external identifier. In other words, the one or more processors may be configured to determine the level of authorization of the person based on an external identifier that is carried or worn by the person.

Accordingly, the proposed concept may be used with a subcomponent that is used to identify or re-identify the person shown in the video data. The identification or re-identification of the person can use image-based techniques such as facial recognition or re-id, QR (Quick Response) codes or similar, or other types of non-image-based identification techniques, such as radio beacons (e.g., Bluetooth beacons) or active visual beacons (e.g., infrared transmitters/receivers). Accordingly, the one or more processors may be configured to identify or re-identify the person shown in the video data. The method may comprise identifying or re-identifying 150 the person shown in the video data.

There are various concepts that enable an identification or re-identification of the person. For example, the one or more processors may be configured to identify the person using facial recognition on the video data. For example, a machine-learning model (further denoted "facial recognition machine-learning model") may be trained to perform various aspects of the facial recognition. For example, the facial recognition machine-learning model may be trained to perform face detection on the video data, and to extract features of the detected face(s). The one or more processors may be configured to compare the extracted features of the detected face(s) with features that are stored in a face-recognition database. For example, the features of a person that is allowed to control the utility vehicle may be stored within the face-recognition database. Optionally, the features of a person that is explicitly not allowed to control the utility vehicle may also be stored within the face-recognition database. If a person shown in the video data is found in the face-recognition database, and the person is allowed to control the utility vehicle, the pose of the person may be analyzed and used to control the utility vehicle. If a person that is shown in the video data is found in the face-recognition database, and the person is explicitly not allowed to control the utility vehicle, or if the person is not found in the face-recognition database, the pose-estimation data of said person may be discarded.

Alternatively (or additionally), person re-identification may be used. In other words, the one or more processors may be configured to re-identify the person using a machine-learning model that is trained for person re-identification (further denoted "person re-identification machine-learning model"). Visual person re-identification systems serve the purpose of distinguishing or re-identifying people, from their appearance alone, in contrast to identification systems that seek to establish the absolute identity of a person (usually from facial features). In this context, the term person re-identification indicates, that a person is re-identified, i.e., that a person that has been recorded earlier, is recorded again and matched to the previous recording.

In various examples, the re-identification is based on so-called re-identification codes that are generated from visual data, such as video data. A re-identification code of a person represents the person and should be similar for different images of a person. A person's re-identification code may be compared with other re-identification codes of persons. If a match is found between a first and a second re-identification code (i.e., if a difference between the re-identification codes is smaller than a threshold), the first and second re-identification codes may be deemed to represent the same person. To perform the re-identification, two components are used - a component for generating re-identification codes, and a component for evaluating these re-identification codes, to perform the actual re-identification. In some examples, the facial recognition mentioned above may be implemented using person re-identification. For example, the feature extraction may be performed by generating a re-identification code, which can be compared to other re-identification codes that are stored in the facial recognition database.

A person may be added to the re-identification system by generating a re-identification code based on an image of the person, and storing the generated code on the one or more storage devices. The person re-identification machine-learning model may be trained to output, for each person shown in the video data, a corresponding re-identification code. The one or more processors may be configured to generate one or more re-identification codes of the person shown in the video data using the re-identification machine-learning model, and to compare the stored re-identification code or codes with the re-identification code of the person. If a match is found, the person shown in the video data may be re-identified. Depending on whether the person is known to be authorized to control the utility vehicle, the pose-estimation data of the person may be analyzed and used to control the utility vehicle. If a person shown in the video data cannot be re-identified, the pose-estimation data of the person may be discarded.

As an alternative or in addition to facial recognition and/or re-identification, a secondary identifier may be used to identify the person. For example, a special marker may be placed on the safety helmet of the person (e.g., instead of facial recognition). With the help of the marker, the person may be uniquely identified in the scene. Using such markers, special designated helpers or similar may be allowed to be present in some of the one or more safety areas.

In the following, two general types of secondary identifiers are introduced - passive visual identifiers, and active beacons. For example, the one or more processors may be configured to identify the person by detecting a (passive) visual identifier that is carried by the person in the video data. For example, the visual identifier may be placed on a vest or a helmet of the person, or be worn as part of a badge of the person. For example, the passive visual identifier may show a computer-readable code, such as a Quick Response (QR) or other two-dimensional visual code. The one or more processors may be configured to detect visual identifiers in the video data, and to identify the person based on the detected visual identifiers. For example, an identity and/or a permission of a person may be encoded into the visual identifier of the person. Alternatively, the visual identifier may yield a code, which may be looked up in a database (by the one or more processors).

Alternatively or additionally, active beacons may be used to identify the person. For example, the one or more processors may be configured to identify the person by detecting an active beacon, such as an active radio beacon (e.g., a Bluetooth beacon) or an active visual beacon (e.g., an active infrared transmitter) carried by the person. For example, the one or more processors may be configured to detect emissions of the active visual beacon in the video data, or to use a visual sensor, such as an infrared sensor, to detect the active visual beacon. Similarly, the one or more processors may be configured to use a radio receiver, which may be connected via the at least one interface, to detect transmissions of the active radio beacon. For example, an identity and/or a permission of a person may be encoded into a code transmitted by the active beacon, e.g., the visual beacon or the active radio beacon, or the transmission of the active beacon may yield a code, such as a Media Access Control code in case of a Bluetooth beacon, which may be looked up in a database (by the one or more processors).

Based on the identification or re-identification of the person, and/or based on the level of authorization of the person, the pose-estimation data of the person may be analyzed and used to control the utility vehicle, or the pose-estimation data may be discarded.

As mentioned above, the one or more processors may be configured to detect whether the person carries a pre-defined item, such as a (hand-held) signaling beacon and/or a safety vest, and to control the utility vehicle (only) if the person carries the pre-defined item. For example, in addition to the person, it is possible to simultaneously identify objects in the scene. For example, image recognition and classification (e.g., using a classification machine-learning model) may be used to identify objects shown in the video data, e.g., objects in the process of being handled by the person. For example, the one or more processors may be configured to detect, using a further machine-learning model (further denoted "object-detection machine-learning model"), whether the person carries a pre-defined item. The method may comprise detecting 140 whether the person carries a pre-defined item. For example, the video data may be analyzed to detect signaling beacons and/or safety vests.

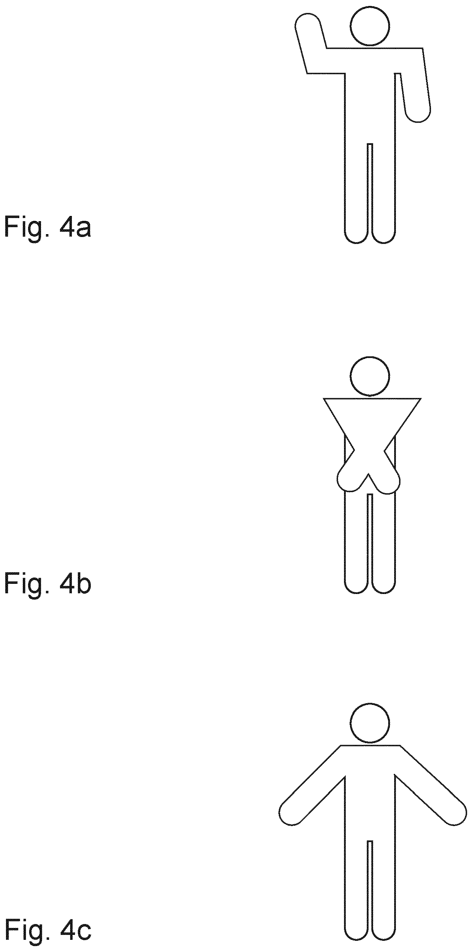

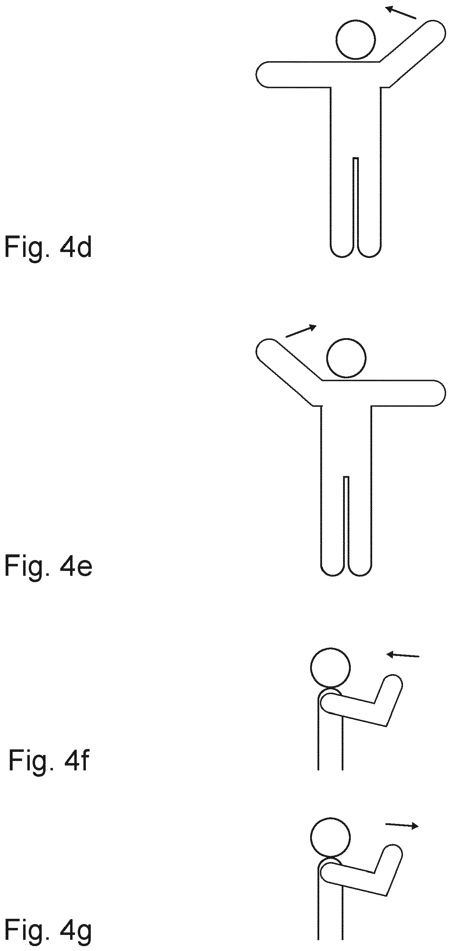

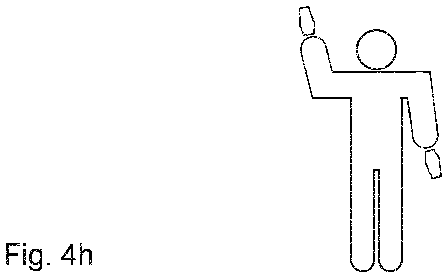

There are a variety of possible poses and signals that can be used to control the utility vehicle. For example, the signal of straightening the arm and facing the palm of the hand against the camera (shown in Fig. 4a) may be interpreted as an instruction to stop the vehicle from moving further towards the person. Similarly, crossing the arms in front of the body (as shown in Fig.4) may shut down the machine entirely in the case of an emergency. Visual body movement signals similar to those used by aircraft marshallers may be used for a more fine-grained control of the utility vehicle.

To improve the safety of the proposed concept, ambiguity may be removed. This may be done by having a fixed set of possible poses, and a fixed set of control instructions that is each associated with one of the poses of the set. In other words, the one or more processors may be configured to detect at least one of a plurality of pre-defined poses (i.e., the fixed set of poses). Each pose of the plurality of pre-defined poses may be associated with a specific control instruction for controlling the utility vehicle. In other words, there may be a one-to-one relationship between the poses of the plurality of pre-defined poses and the corresponding control instructions. The one or more processors may be configured to control the utility vehicle based on the control instruction associated with the detected pose. In other words, when a pose of the plurality of pre-defined poses is detected, the associated control instruction may be used to control the utility vehicle. For example, the one or more processors may be configured to generate a control signal for controlling the utility vehicle based on the detected pose, e.g., based on the control instruction associated with the detected pose.

As mentioned above, the pose-estimation data may comprise a so-called pose-estimation skeleton, which comprises a plurality of joints and a plurality of limbs. Each of the plurality of pre-defined poses may result in a specific angle between some of the limbs of the skeleton. For example, an angle of 60 to 120 degrees between the right upper arm and the right lower arm may be indicative of the pose shown in Fig. 4a. The respective characteristic angles of the plurality of pre-defined poses may be stored in a database. The one or more processors may be configured to compare the angles of the pose-estimation skeleton generated by the pose-estimation machine-learning model with the characteristic angles of the plurality of pre-defined poses that are stored in the database, and to detect the at least one pre-defined pose based on the comparison. Alternatively, machine-learning may be used to detect the at least one pre-defined pose of the plurality of pre-defined poses.

As has been outlined above, not only static poses may be identified using the pose-estimation machine-learning model, but also the progress of the pose may be determined. For example, the progress of the pose may be used to identify poses that comprise a movement over time, so-called signal poses, in contrast to static poses which do not comprise an element of movement. In other words, the plurality of pre-defined poses comprises one or more static poses and one or more signal poses, with the one or more signal poses being based on a transition from a first pose to a second pose. The one or more processors may be configured to detect the at least one pre-defined pose based on the information about the progress of the pose. Accordingly, the one or more processors may be configured to detect the at least one pre-defined signal pose based on the information on the progress of the pose. For example, as the at least one pre-defined signal being is based on a transition from a first pose to a second pose, the at least one pre-defined signal pose may be detected by comparing the angles of the pose to the characteristic angles of the first and second pose stored in the database.

In connection with Figs. 4a to 4h, various examples of poses and associated control instructions are given. Figs. 4a to 4h show schematic diagrams of examples of static poses or signal poses. For example, as shown in Fig. 4a, the plurality of pre-defined poses may comprise a static pose associated with a control instruction for halting a movement of the utility vehicle. As explained above, Fig. 4a shows the marshaller holding up the right hand towards the utility vehicle. Consequently, an angle of 60 to 120 degrees between the right upper arm and the right lower arm may be indicative of the pose shown in Fig. 4a, i.e., the static pose associated with a control instruction for halting a movement of the utility vehicle.

For example, as shown in Fig. 4b, the plurality of pre-defined poses may comprise a static pose associated with a control instruction for stopping an engine of the utility vehicle. In Fig. 4b, the arms of the marshaller are crossed in front of the body, resulting in a characteristic angle of approximately negative 45 degrees between the "shoulder limb" and the upper arms of the marshaller.

As shown in Fig. 4c, the plurality of pre-defined poses may comprise a static pose associated with a control instruction for starting an engine of the utility vehicle. For example, the arms of the marshaller may be stretched diagonally outwards towards the floor in this example of the static pose associated with the control instruction for starting the engine of the utility vehicle.

In Figs. 4d to 4g, several signal poses are shown. For example, the plurality of pre-defined poses may comprise a signal pose associated with a control instruction for adjusting a steering angle of the utility vehicle to the left (Fig. 4d) and/or a signal pose associated with a control instruction for adjusting a steering angle of the utility vehicle to the right (Fig. 4e). As shown in Fig. 4d, the signal pose associated with the control instruction for adjusting the steering angle of the utility vehicle to the left may be based on a first pose where the right arm is stretched straight outwards and the left arm is stretched diagonally outwards towards the sky and a second pose where the right arm remains stretched straight outwards and the left arm is stretched diagonally inwards to the sky. In the corresponding signal pose for adjusting a steering angle of the utility vehicle to the right, the roles of the arms may be reversed.

For example, the plurality of pre-defined poses may comprise a signal pose associated with a control instruction for controlling the utility vehicle to move backward (Fig. 4f), and a signal pose associated with a control instruction for controlling the utility vehicle to move backward (Fig. 4g). As shown in Fig. 4g, the signal pose associated with a control instruction for controlling the utility vehicle to move backward may comprise a first pose, in which the right lower arm is at an angle of about 75 to 105 degrees relative to the right upper arm and stretched towards the sky, and a second pose, in which the right lower arm is tilted forwards, resulting in an angle of about 115 to 150 degrees relative to the right upper arm. In Fig. 4f, instead of tilting the lower arm forwards, the lower arm is tilted backwards.

In Fig. 4h, a signal pose that is executed using two signaling beacons is shown. As outlined above, the pose-estimation machine-learning model may be trained to output the pose-estimation data for persons carrying one or two signaling beacons. In this case, the signaling beacon(s) may be treated as additional limb(s) of the pose-estimation skeleton.

At least some examples of the present disclosure are based on using a machine-learning model or machine-learning algorithm. Machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g., a classification algorithm, a regression algorithm or a similarity learning algorithm. Classification algorithms may be used when the outputs are restricted to a limited set of values, i.e., the input is classified to one of the limited set of values. Regression algorithms may be used when the outputs may have any numerical value (within a range). Similarity learning algorithms are similar to both classification and regression algorithms, but are based on learning from examples using a similarity function that measures how similar or related two objects are.

Apart from supervised or semi-supervised learning, unsupervised learning may be used to train the machine-learning model. In unsupervised learning, (only) input data might be supplied, and an unsupervised learning algorithm may be used to find structure in the input data, e.g., by grouping or clustering the input data, finding commonalities in the data. Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

In various examples introduced above, various machine-learning models are being used, e.g., a pose-estimation machine-learning model, a machine-learning model being used for segmenting pose-estimation data of multiple persons shown in the video data, an object-detection machine-learning model, a facial recognition machine-learning model, or a person re-identification machine-learning model. For example, these machine-learning models may be trained using various techniques, as shown in the following.

For example, the pose-estimation machine-learning model may be trained using supervised learning. For example, video data may be used as training samples of the training, and corresponding pose-estimation data, e.g., the points of the pose-estimation skeleton in a two-dimensional or three-dimensional coordinate system, may be used as desired output. Alternatively, reinforcement learning may be used, with a reward function that seeks to minimize the deviation of the generated pose-estimation data from the actual poses shown in the video data being used for training.

For example, the machine-learning model being used for segmenting pose-estimation data of multiple persons shown in the video data may be trained using unsupervised leaning, as the segmentation can be performed using clustering. Alternatively, supervised learning may be used, with video data showing multiple persons being used as training samples and corresponding segmented pose-estimation data being used as desired output.

The object-detection machine-learning model may be trained using supervised learning, by providing images comprising the objects to be detected as training samples and the positions of the objects to be detected as desired output of the training.

The machine-learning model or models being used for facial recognition may also be trained using supervised learning, e.g., by training the machine-learning model to detect faces within the video data and to output corresponding positions to be used for a rectangular bounding box, with frames of the video data being provided as training samples and the corresponding positions of the bounding boxes being provided as desired training output. Feature extraction is a classification problem, so a classification algorithm may be applied. Alternatively, as outlined above, the facial recognition can be implemented using a person re-identification machine-learning model.

The person re-identification machine-learning model may be trained using a triplet-loss based training, for example. In triplet loss, a baseline input is compared to a positive input and a negative input. For each set of inputs being used for training the person re-identification machine-learning model, two samples showing the same person may be used as baseline input and positive input, and a sample from a different person may be used as negative input of the triplet loss-based training. However, the training of the person re-identification machine-learning model may alternatively be based on other supervised learning-, unsupervised learning- or reinforcement learning algorithms. For example, Ye et al: "Deep Learning for Person Re-identification: A Survey and Outlook" (2020) provides examples for machine learning-based re-identification systems, with corresponding training methodologies.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge, e.g., based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input. In at least some embodiments, the machine-learning model may be deep neural network, e.g., a neural network comprising one or more layers of hidden nodes (i.e., hidden layers), prefer-ably a plurality of layers of hidden nodes.

Alternatively, the machine-learning model may be a support vector machine. Support vector machines (i.e., support vector networks) are supervised learning models with associated learning algorithms that may be used to analyze data, e.g., in classification or regression analysis. Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The at least one interface 12 introduced in connection with Fig. 1a, may correspond to one or more inputs and/or outputs for receiving and/or transmitting information, which may be in digital (bit) values according to a specified code, within a module, between modules or between modules of different entities. For example, the at least one interface 12 may comprise interface circuitry configured to receive and/or transmit information. For example, the one or more processors 14 introduced in connection with Fig. 1a may be implemented using one or more processing units, one or more processing devices, any means for processing, such as a processor, a computer or a programmable hardware component being operable with accordingly adapted software. In other words, the described function of the one or more processors 14 may as well be implemented in software, which is then executed on one or more programmable hardware components. Such hardware components may comprise a general-purpose processor, a Digital Signal Processor (DSP), a micro-controller, etc. In some examples, the one or more processors may be or comprise one or more reconfigurable hardware elements, such as a Field-Programmable Gate Array (FPGA).For example, the one or more storage devices 16 introduced in connection with Fig. 1a may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (10) for a utility vehicle (100; 300; 310), the apparatus comprising:
at least one interface (12) for obtaining video data from one or more cameras (102) of the utility vehicle;
one or more processors (14) configured to:
process, using a machine-learning model, the video data to determine pose information of a person being shown in the video data, the machine-learning model being trained to generate pose-estimation data based on video data,
detect at least one pre-defined pose based on the pose information of the person, and
control the utility vehicle based on the detected at least one pre-defined pose.

2. The apparatus according to claim 1, wherein the one or more processors are configured to detect at least one of a plurality of pre-defined poses, each pose of the plurality of pre-defined poses being associated with a specific control instruction for controlling the utility vehicle, and to control the utility vehicle based on the control instruction associated with the detected pose.

3. The apparatus according to claim 2, wherein the plurality of pre-defined poses comprises one or more static poses and one or more signal poses, the one or more signal poses being based on a transition from a first pose to a second pose.

4. The apparatus according to claim 3, wherein the plurality of pre-defined poses comprises at least one of a static pose associated with a control instruction for halting a movement of the utility vehicle, a static pose associated with a control instruction for starting an engine of the utility vehicle, a static pose associated with a control instruction for stopping an engine of the utility vehicle, a signal pose associated with a control instruction for controlling the utility vehicle to move forward, and a signal pose associated with a control instruction for controlling the utility vehicle to move backward.

5. The apparatus according to one of the claims 1 to 4, wherein the machine-learning model is trained to output the pose-estimation data with information about a progress of the pose of the person over time as shown over the course of a plurality of frames of the video data, wherein the one or more processors are configured to detect the at least one pre-defined pose based on the information about the progress of the pose.

6. The apparatus according to claim 5, wherein the one or more processors are configured to detect at least one pre-defined signal pose based on the information on the progress of the pose, the at least one pre-defined signal being pose based on a transition from a first pose to a second pose.

7. The apparatus according to one of the claims 1 to 6, wherein the one or more processors are configured to detect whether the person carries a pre-defined item, and to control the utility vehicle if the person carries the pre-defined item.

8. The apparatus according to claim 7, wherein the pre-defined item is one of a signaling beacon and a safety vest.

9. The apparatus according to claim 8, wherein the machine-learning model is trained to generate pose-estimation data of a person carrying a signal beacon based on video data.

10. The apparatus according to one of the claims 1 to 9, wherein the one or more processors are configured to identify or re-identify the person, and to control the utility vehicle based on the identification or re-identification of the person.

11. The apparatus according to claim 10, wherein the one or more processors are configured to identify the person using facial recognition on the video data,
and/or wherein the one or more processors are configured to identify the person by detecting a visual identifier carried by the person in the video data,
and/or wherein the one or more processors are configured to identify the person by detecting an active beacon carried by the person,
and/or wherein the one or more processors are configured to re-identify the person using a machine-learning model that is trained for person re-identification.

12. A utility vehicle (100; 300; 310) comprising the apparatus (10) according to one of the claims 1 to 11 and one or more cameras (102).

13. The utility vehicle according to claim 12, wherein the one or more cameras are arranged at the top of a cabin (104) of the utility vehicle, or wherein the one or more cameras are arranged at a platform (106) extending from the top of the cabin of the utility vehicle

14. A method for a utility vehicle, the method comprising:
obtaining (110) video data from one or more cameras of the utility vehicle;
processing (120), using a machine-learning model, the video data to determine pose information of a person being shown in the video data, the machine-learning model being trained to generate pose-estimation data based on video data;
detecting (130) at least one pre-defined pose based on the pose information of the person; and
controlling (160) the utility vehicle based on the detected at least one pre-defined pose.

15. A computer program having a program code for performing the method of claim 14, when the computer program is executed on a computer, a processor, processing circuitry, or a programmable hardware component.
